# EUROPEAN PATENT APPLICATION

(11) **EP 4 755 700 A1**
(43) Date of publication of application: **10.06.2026**
(21) Application number: 24849605.1
(22) Date of filing: 31.07.2024
(51) Int. Cl.: B60L 53/122, H02J 50/00

(54) **INTERFACE DEVICE OF COIL CONDUCTIVE WIRE FOR WIRELESS CHARGING OF ELECTRIC VEHICLE, COUPLING STRUCTURE OF COIL CONDUCTIVE WIRE AND INTERFACE DEVICE, AND WIRELESS CHARGING PAD USING COUPLING STRUCTURE**

(30) Priority: 31.07.2023 KR 20230099549
(71) Applicant: Hyundai Motor Company, Seoul 06797 (KR); Kia Corporation, Seoul 06797 (KR)
(72) Inventor: KIM, Chang Gyun, Seoul 05770 (KR); CHI, Soung Hwan, Hwaseong-si, Gyeonggi-do 18280 (KR)
(74) Representative: Isarpatent
(86) International application number: PCT/KR2024/011227
(87) International publication number: WO 2025/029038

(57) **Abstract**

Disclosed is an interface device that has one end forming a coil structure and is coupled to one end of both ends of a coil conductive wire formed by a plurality of conductive wire elements extending in a first direction, which is the direction of a current path, and being arranged in parallel, so as to provide an electrical connection with the coil conductive wire, wherein in a cross-section perpendicular to the first direction of the coil conductive wire, the plurality of conductive wire elements are arranged to be spaced apart from each other by a first predetermined interval.

## Description

### [Technical Field]

The present disclosure relates to an interface device of a coil wire for wireless charging of an electric vehicle, a coupling structure of the coil wire and the interface device, and a wireless charging pad using the coupling structure, and particularly relates to an interface structure applicable to a coil structure that increases current transfer characteristics and reduces heat generation.

### [Background Art]

An electric vehicle (EV) drives a motor with the power of a battery, and compared to a conventional gasoline engine vehicle, has advantages such as fewer air pollutants including exhaust gas and noise, fewer breakdowns, a longer lifespan, and simpler driving operations.

Electric vehicles are classified according to the drive source into a hybrid electric vehicle (HEV), a plug-in hybrid electric vehicle (PHEV), and an electric vehicle (EV). The HEV has an engine as the main power source and a motor as the auxiliary power source. The PHEV has a motor as the main power source and an engine used when the battery is discharged. The EV has a motor but does not have an engine.

An electric vehicle charging system can be basically defined as a system that charges a battery mounted on an electric vehicle using power from a distribution grid of commercial power or an energy storage device. Such an electric vehicle charging system may have various forms depending on the type of electric vehicle. For example, the electric vehicle charging system may include a conductive charging system using a cable or a wireless power transmission system of a contactless type.

During charging of the electric vehicle, a vehicle assembly (VA) mounted on the electric vehicle forms an inductive resonant coupling with a transmission pad of a ground assembly (GA) located at a charge station or charging spots, and may charge the battery of the electric vehicle using power delivered from the ground assembly through the inductive resonant coupling.

Meanwhile, in a wireless power transmission system of a magnetic induction method, the structure of a transmission pad and a reception pad becomes an important factor to secure power transfer efficiency. In particular, the transmission pad and the reception pad embed ferrite, which is a magnetic material that assists wireless power transmission, and a coil is formed surrounding a ferrite structure. At this time, the transmission pad and the reception pad include a winding frame that maintains the structure of the transmission pad and the reception pad by fixing the coil.

A conventional litz wire has a form in which an inner core is surrounded by an outer core, and each inner core forms a circle on a cross section perpendicular to the direction of a current path. Due to the form of the litz wire, heat generated is not easily transmitted to the outside, and considering the current transfer characteristics in which loss increases as heat generation continues, long-term use is difficult. Accordingly, in a power transmission system using the litz wire, there is also an aspect in which an increase in cost is expected in order to add a cooling function. Even when a cooling function is added to the system, the heat transfer rate of heat generated inside the litz wire being transmitted to the outside is low, which may adversely affect efficiency.

In the case of a litz wire including a plurality of inner cores, the coil wire and a contact point may be connected through a lug structure, which is a structure similar to a fastening structure of a bolt and a nut, regardless of a shape of the coil wire. At this time, heat loss and current loss may occur. However, when the coil wire and the contact point are connected through a conventional lug structure, there is difficulty in identifying an amount of heat loss and/or current loss that occurs.

### [Disclosure]

### [Technical Problem]

One of the objectives of the present disclosure is to provide an interface device that connects a coil wire and a contact point, which reduces heat loss and/or current loss and makes it possible to identify an amount of the loss.

One of the objectives of the present disclosure is to provide an interface device that connects a coil wire and a contact point in a wireless charging pad using a coil structure that increases current transfer characteristics and reduces heat generation, a coupling structure of the coil wire and the interface device, and a wireless charging pad including the coupling structure.

### [Technical Solution]

An interface device provides an electrical connection with a coil wire having an end forming a coil structure for generating a magnetic field using electromagnetic induction by an alternating current electrical signal, and other end being connected with the interface device. The interface device is configured to provide the electrical connection with the coil wire based on the coupling to the other end of the coil wire formed by a plurality of wire elements that extend in a first direction, which is a direction of a current path, and are arranged in parallel, wherein, on a cross-section perpendicular to the first direction of the coil wire, the plurality of wire elements are arranged to be spaced apart from each other by a predetermined first interval.

The interface device may comprise a third plate contacting a surface of the other end of the coil wire, which is perpendicular to the first direction of the coil wire, wherein a current is applied to the plurality of wire elements through the third plate.

The interface device may comprise a first plate having at least a part of a lower surface contacting an upper surface of the other end of the coil wire; a second plate having at least a part of an upper surface contacting a lower surface of the other end of the coil wire; and a third plate connecting the first plate and the second plate.

The plurality of wire elements may be arranged while being spaced apart from each other by the first interval in a second direction on a cross-section perpendicular to the first direction of the coil wire, and may be arranged while being spaced apart from each other by a second interval in a third direction different from the second direction on the cross-section perpendicular to the first direction of the coil wire, thereby forming a stacked structure on the cross-section perpendicular to the first direction of the coil wire, and a current may be applied to the plurality of wire elements through the third plate.

The second plate may comprise a protruding plate extending in a direction opposite to a direction in which the other end of the coil wire is contacted based on the third plate, and a current may be applied to the plurality of wire elements through the protruding plate of the second plate.

The coil wire may be wound on an inner bottom surface of an outer case to form a coil, and the protruding plate of the second plate may be fixedly coupled to the inner bottom surface of the outer case.

The first plate may comprise a first protruding plate and a second protruding plate, both ends of which are respectively extended in a direction perpendicular to the first direction on a plane in which the first plate is extended, and the second plate may comprise a third protruding plate and a fourth protruding plate, both ends of which are respectively extended in a direction perpendicular to the first direction on a plane in which the second plate is extended. The third protruding plate corresponding to the first protruding plate and the first protruding plate may be fixedly coupled by a first fastener, and the fourth protruding plate corresponding to the second protruding plate and the second protruding plate may be fixedly coupled by a second fastener.

A coupling structure of a coil wire and an interface device, may comprise a coil wire formed by a plurality of wire elements extending in a first direction that is a direction of a current path and being arranged in parallel, an end among both ends of the coil wire forming a coil structure for generating a magnetic field using electromagnetic induction by an alternating current electrical signal; and the interface device coupled to other end among both ends of the coil wire to provide an electrical connection with the coil wire, wherein, on a cross-section perpendicular to the first direction of the coil wire, the plurality of wire elements are arranged while being spaced apart from each other by a predetermined first interval.

The interface device may comprise a third plate contacting one surface of the other end of the coil wire that is perpendicular to the first direction of the coil wire, and a current may be applied to the plurality of wire elements through the third plate.

The interface device may comprise a first plate having at least a part of a lower surface contacting an upper surface of the other end of the coil wire; a second plate having at least a part of an upper surface contacting a lower surface of the other end of the coil wire; and a third plate connecting the first plate and the second plate.

The plurality of wire elements may be arranged while being spaced apart from each other by the first interval in a second direction on a cross-section perpendicular to the first direction of the coil wire, and may be arranged while being spaced apart from each other by a second interval in a third direction different from the second direction on the cross-section perpendicular to the first direction of the coil wire, thereby forming a stacked structure on the cross-section perpendicular to the first direction of the coil wire, and a current may be applied to the plurality of wire elements through the third plate.

The second plate may comprise a protruding plate extending further in a direction opposite to a direction in which the other end of the coil wire is contacted based on the third plate, and a current may be applied to the plurality of wire elements through the protruding plate of the second plate.

The coil wire may be wound on an inner bottom surface of an outer case to form a coil, and the protruding plate of the second plate may be fixedly coupled to the inner bottom surface of the outer case.

The first plate may comprise a first protruding plate and a second protruding plate, both ends of which are respectively extended in a direction perpendicular to the first direction on a plane in which the first plate is extended. The second plate may comprise a third protruding plate and a fourth protruding plate, both ends of which are respectively extended in a direction perpendicular to the first direction on a plane in which the second plate is extended. The third protruding plate corresponding to the first protruding plate and the first protruding plate may be fixedly coupled by predetermined first fastener, and the fourth protruding plate corresponding to the second protruding plate and the second protruding plate may be fixedly coupled by predetermined second fastener.

A wireless charging pad for wirelessly transmitting or receiving power using electromagnetic induction by an alternating current electrical signal flowing through a coil wire, may comprise a coil formed by winding an end among both ends of the coil wire to surround a central space; and an interface device coupled to other end among both ends of the coil wire to provide an electrical connection with the coil wire. The coil wire may be formed by a plurality of wire elements extending in a first direction that is a direction of a current path and being arranged in parallel. On a cross-section perpendicular to the first direction of the coil wire, the plurality of wire elements may be arranged while being spaced apart from each other by a predetermined first interval.

The interface device may comprise a third plate contacting one surface of the other end of the coil wire that is perpendicular to the first direction of the coil wire, and a current may be applied to the plurality of wire elements through the third plate.

The interface device may comprise a first plate having at least a part of a lower surface contacting an upper surface of the other end of the coil wire; a second plate having at least a part of an upper surface contacting a lower surface of the other end of the coil wire; and a third plate connecting the first plate and the second plate.

The plurality of wire elements may be arranged while being spaced apart from each other by the first interval in a second direction on a cross-section perpendicular to the first direction of the coil wire, and may be arranged while being spaced apart from each other by a second interval in a third direction different from the second direction on the cross-section perpendicular to the first direction of the coil wire, thereby forming a stacked structure on the cross-section perpendicular to the first direction of the coil wire. A current may be applied to the plurality of wire elements through the third plate.

The second plate may comprise a protruding plate extending further in a direction opposite to a direction in which the other end of the coil wire is contacted based on the third plate, and a current may be applied to the plurality of wire elements through the protruding plate of the second plate.

The wireless charging pad may further comprise an outer case. The coil wire may be wound on an inner bottom surface of the outer case to form the coil, and the protruding plate of the second plate may be fixedly coupled to the inner bottom surface of the outer case.

The first plate may comprise a first protruding plate and a second protruding plate, both ends of which are respectively extended in a direction perpendicular to the first direction on a plane in which the first plate is extended, and the second plate may comprise a third protruding plate and a fourth protruding plate, both ends of which are respectively extended in a direction perpendicular to the first direction on a plane in which the second plate is extended. The third protruding plate corresponding to the first protruding plate and the first protruding plate may be fixedly coupled by predetermined first fastener, and the fourth protruding plate corresponding to the second protruding plate and the second protruding plate may be fixedly coupled by predetermined second fastener.

### [Advantageous Effects]

According to an exemplary embodiment of the present disclosure, heat loss and/or current loss may be reduced through an interface device that connects a coil wire and a contact point, and an amount of the loss may be identified through the interface device.

According to an exemplary embodiment of the present disclosure, an interface device that connects a coil wire and a contact point in a wireless charging pad using a coil structure that increases current transfer characteristics and reduces heat generation, a coupling structure of the coil wire and the interface device, and a wireless charging pad including the coupling structure may be provided.

### [Description of Drawings]

FIG. 1 is a conceptual diagram of examples of a wireless power transmission system for an electric vehicle to which exemplary embodiments of the present disclosure are applied.
FIGS. 2 and 3 are conceptual diagrams of x, y, and z axes defined in SAE J2954 that can be applied to exemplary embodiments of the present disclosure.
FIG. 4 is a conceptual diagram illustrating a wireless charging circuit for an electric vehicle according to exemplary embodiments of the present disclosure.
FIG. 5 is an equivalent circuit of a single-phase to single-phase wireless power transmission system according to exemplary embodiments of the present disclosure.
FIG. 6 is a conceptual cross-sectional view and an elevational view of a transmission pad according to exemplary embodiments of the present disclosure.
FIG. 7 illustrates a litz wire according to a conventional exemplary embodiment.
FIG. 8 illustrates a coil according to exemplary embodiments of the present disclosure.
FIG. 9 is a cross-sectional view of one coil wire of FIG. 8.
FIG. 10 is a diagram for explaining a coil structure according to other exemplary embodiments of the present disclosure.
FIG. 11 is a cross-sectional view of one coil wire of FIG. 8 according to other exemplary embodiments of the present disclosure.
FIG. 12 is a cross-sectional view of a coil wire according to still other exemplary embodiments of the present disclosure.
FIG. 13 is a cross-sectional view of a coil wire according to still other exemplary embodiments of the present disclosure.
FIG. 14 is a cross-sectional view of a coil wire according to still other exemplary embodiments of the present disclosure.
FIG. 15 is a diagram for explaining a coupling structure of a coil wire and an interface device according to exemplary embodiments of the present disclosure.
FIG. 16 shows an interface according to exemplary embodiments of the present disclosure.
FIG. 17 is a diagram for explaining a method of fixing the interface to a transmission pad or a reception pad according to exemplary embodiments of the present disclosure.
FIG. 18 is a block diagram illustrating a generalized configuration of hardware included in a transmission pad and/or a reception pad of the present disclosure or related to the transmission pad and/or the reception pad to control a sequence for wireless power transmission.

### [Best mode of the Invention]

The present disclosure is capable of various modifications and may have several embodiments, and specific embodiments will be illustrated in the drawings and described in detail. However, it should be understood that the present disclosure is not limited to particular embodiments disclosed herein but includes all modifications, equivalents, and alternatives falling within the spirit and scope of the present disclosure.

The terminologies including ordinals such as "first" and "second" designated for explaining various components in this specification are used to discriminate a component from the other ones but are not intended to be limiting to a specific component. For example, a second component may be referred to as a first component and, similarly, a first component may also be referred to as a second component without departing from the scope of the present disclosure. As used herein, the term "and/or" may include a presence of one or more of the associated listed items and any and all combinations of the listed items.

In the description of exemplary embodiments of the present disclosure, "at least one of A and B" may mean "at least one of A or B" or "at least one of combinations of one or more of A and B". In addition, in the description of exemplary embodiments of the present disclosure, "one or more of A and B" may mean "one or more of A or B" or "one or more of combinations of one or more of A and B".

When a component is referred to as being "connected" or "coupled" to another component, the component may be directly connected or coupled logically or physically to the other component or indirectly through an object therebetween. Contrarily, when a component is referred to as being "directly connected" or "directly coupled" to another component, it is to be understood that there is no intervening object between the components. Other words used to describe the relationship between elements should be interpreted in a similar fashion.

The terminologies are used herein for the purpose of describing particular exemplary embodiments only and are not intended to limit the present disclosure. The singular forms include plural referents as well unless the context clearly dictates otherwise. Also, the expressions "comprises," "includes," "constructed," "configured" are used to refer a presence of a combination of stated features, numbers, processing steps, operations, elements, or components, but are not intended to preclude a presence or addition of another feature, number, processing step, operation, element, or component.

Unless defined otherwise, all terms used herein, including technical or scientific terms, have the same meaning as commonly understood by those of ordinary skill in the art to which the present disclosure pertains. Terms such as those defined in a commonly used dictionary should be interpreted as having meanings consistent with their meanings in the context of related literatures and will not be interpreted as having ideal or excessively formal meanings unless explicitly defined in the present application.

Meanwhile, one or more conventional components may be included in a configuration of the present disclosure if necessary, and such components will be described herein to an extent that it does not obscure the technical idea and concept of the present disclosure. If the description of the conventional components may obscure the technical idea and concept of the present disclosure, however, detailed description of such components may be omitted for simplicity.

Terms used in the present disclosure are defined as follows.

"Electric Vehicle (EV)": An automobile, as defined in 49 CFR 523.3, intended for highway use, powered by an electric motor that draws current from an on-vehicle energy storage device, such as a battery, which is rechargeable from an off-vehicle source, such as residential or public electric service or an on-vehicle fuel powered generator.

The EV may include an electric vehicle, an electric automobile, an electric road vehicle (ERV), a plug-in vehicle (PV), an electromotive vehicle (xEV), etc., and the xEV may be classified into a plug-in all-electric vehicle (BEV), a battery electric vehicle, a plug-in electric vehicle (PEV), a hybrid electric vehicle (HEV), a hybrid plug-in electric vehicle (HPEV), a plug-in hybrid electric vehicle (PHEV), etc.

"Plug-in Electric Vehicle (PEV)": An Electric Vehicle that recharges the on-vehicle primary battery by connecting to the power grid.

"Plug-in vehicle (PV)": An electric vehicle rechargeable via wireless charging from an electric vehicle supply equipment (EVSE) without using a physical plug or a physical socket.

"Heavy duty vehicle (H.D. Vehicle)": Any four-or more wheeled vehicle as defined in 49 CFR 523.6 or 49 CFR 37.3 (bus).

"Light duty plug-in electric vehicle": A three or four-wheeled vehicle propelled by an electric motor drawing current from a rechargeable storage battery or other energy devices for use primarily on public streets, roads and highways and rated at less than 4,545 kg gross vehicle weight.

"Wireless power charging system (WCS)": A system for wireless power transfer and control of interactions including operations for an alignment and communications between a supply device (or ground assembly) and an EV device (or vehicle assembly).

"Wireless power transfer (WPT)": A transfer of electric power between a power source such as a utility, the power grid, an energy storage device, a fuel cell generator and the EV through a contactless channel such as electromagnetic induction and resonance.

"Utility": A set of systems which supply electrical energy and include a customer information system (CIS), an advanced metering infrastructure (AMI), rates and revenue system, etc. The utility may provide an EV with energy through rates table and discrete events. Also, the utility may provide information related to certification on EVs, interval of power consumption measurements, and tariff.

"Smart charging": A system in which EVSE and/or EV (including the PEV, or PHEV) communicate with power grid to optimize charging ratio or discharging ratio of EV by reflecting capacity of the power grid or expense of use.

"Automatic charging": A procedure in which inductive charging is automatically performed after a vehicle is located in a proper position corresponding to a primary charger assembly which may transfer power by a conductive or inductive charging. The automatic charging may be performed after obtaining necessary authentication and right.

"Interoperability": A state in which components of a system interwork with corresponding components of the system to perform operations aimed by the system. Additionally, information interoperability may refer to capability that two or more networks, systems, devices, applications, or components may efficiently share and easily use information without causing inconvenience to users.

"Inductive charging system": A system transferring energy from a power source to an EV via a two-part gapped core transformer in which the two halves of the transformer, i.e., primary and secondary coils, are physically separated from one another. In the present disclosure, the inductive charging system may correspond to an EV power transfer system.

"Inductive coupler": A transformer formed by the primary coil in the primary device or a ground assembly (GA) and the secondary coil in the secondary device or a vehicle assembly (VA) that allows power to be transferred through electric isolation.

"Inductive coupling": A magnetic coupling between two coils. One of the two coils may refer to a primary coil or GA coil, and the other one of the two coils may refer to a secondary coil or vehicle assembly VA coil.

"Supply Power Circuit (SPC)" or "Ground assembly (GA)": An assembly disposed on a primary device or the ground assembly or an infrastructure side including the primary coil (or GA coil) and other components. The other components may include at least one part to control the impedance and resonant frequency, a ferrite enforcing the magnetic path, and electromagnetic shielding materials. For example, the SPC or GA may include a power/frequency conversion unit and a SPC controller (or GA controller) necessary to function as a power source of a wireless power charging system, a wiring from the grid, and wirings between each unit, filtering circuits, and a housing.

"EV power circuit (EVPC)" or "Vehicle assembly (VA)": An assembly mounted in the vehicle including the secondary coil (or VA Coil) and other components. The other components may include at least one part to control the impedance and resonant frequency, a ferrite enforcing the magnetic path, and electromagnetic shielding materials. For example, the EVPC or VA may include a power/frequency conversion unit and a EVPC controller (or VA controller) necessary to as the vehicle part of a wireless power charging system, wiring to the vehicle batteries, and wirings between each unit, filtering circuits, and a housing.

The SPC may be referred to as or identified by the ground assembly (GA) or the like. Similarly, the EVPC may be referred to as or identified by the vehicle assembly (VA) or the like.

The GA may be referred to as the primary device, or the like, and the VA may be referred to as the EV device, the secondary device, or the like.

The GA may be referred to as the supply device, a power supply side device, or the like, and the VA may be referred to as the EV device, an EV side device, or the like.

"Primary device": An apparatus providing the contactless coupling to the secondary device. In other words, the primary device may be an apparatus external to an EV. When the EV is receiving power, the primary device may operate as the source of the power to be transferred. The primary device may include the housing and all covers.

"Secondary device": An apparatus mounted in the EV providing the contactless coupling to the primary device. In other words, the secondary device may be provided within the EV. When the EV is receiving power, the secondary device may transfer the power from the primary device to the EV. The secondary device may include the housing and all covers.

"Supply Power Electronics" indicates a portion of the SPC or GA regulating an output power level of the primary coil (or GA Coil) based on information from the vehicle. "EV Power Electronics" indicates a portion of the EVPC or VA monitoring specific on-vehicle parameters during the charging and initiating communications with the EVPC or GA to facilitate the adjustment of the output power level.

The Supply Power Electronics may be referred to as GA electronics, a GA controller, or a primary device communication controller (PDCC), and the EV Power Electronics may be referred to as VA electronics, a VA controller, or an electric vehicle communication controller (EVCC).

"Magnetic gap": A vertical distance between the plane of the higher of the top of the litz wire or the top of the magnetic material in the primary coil/GA Coil to the plane of the lower of the bottom of the litz wire or the magnetic material in the secondary coil/VA Coil when aligned.

"Ambient temperature": A ground-level temperature of the air measured at a subsystem under consideration and not in direct sun light.

"Vehicle ground clearance": A vertical distance between a ground surface and a lowest part of a vehicle floor pan.

"Vehicle magnetic ground clearance": A vertical distance between the plane of the lower of the bottom of the litz wire or the magnetic material in the secondary coil or VA Coil mounted in the vehicle to the ground surface.

"Secondary coil surface distance" or "VA coil magnetic surface distance": A distance between a plane of a nearest magnetic or conducting component surface to a lower external surface of the secondary coil or VA coil when mounted. Such a distance may include any protective coverings and additional items which may be packaged in the secondary coil or VA coil enclosure.

The secondary coil may be referred to as the VA coil, a vehicle coil, or a receiver coil. Similarly, the primary coil may be referred to as the GA coil or a transmit coil.

"Exposed conductive component": A conductive component of electrical equipment (e.g., an electric vehicle) that may be touched, and is not normally energized but may become energized when a fault occurs.

"Hazardous live component": A live component which, under certain conditions, may generate a harmful electric shock.

"Live component": Any conductor or conductive component intended to be electrically energized in normal use.

"Direct contact": A contact of a person with a live component. See IEC 61140 standard.

"Indirect contact": A contact of a person with exposed, conductive, and energized components made live by an insulation failure. See IEC 61140 standard.

"Alignment": A process of finding a relative position of the secondary device with respect to the primary device and/or a relative position of the primary device with respect to the secondary device for an efficient power transfer. In the present disclosure, the alignment may be directed to the alignment in the wireless power transfer system but may not be limited thereto.

"Pairing": A process of associating the vehicle (EV) with a single dedicated supply device (primary device) disposed such that the power transfer may occur. The pairing may include a process of associating the EVPC or VA controller with the SPC or GA controller of the charging spot.

The correlation or association process may include a process of establishing a relationship between two peer communication entities.

"Command and control communications": Communications for exchanging information required for starting, controlling, and ending the wireless power transfer process between an electric vehicle supply equipment and an electric vehicle.

"High-level communication (HLC)": A digital communication capable of handling all information not covered by the command and control communications. The data link of the HLC may use a power line communication (PLC) but is not limited thereto.

"Low-power excitation (LPE)": A technique of activating the supply device (or primary device) for the fine positioning and pairing so that the EV may detect the supply device, and vice versa.

"Service set identifier (SSID)": A unique identifier including 32-characters attached to a header of a packet transmitted on a wireless LAN. The SSID identifies the basic service set (BSS) to which the wireless device attempts to connect. The SSID distinguishes multiple wireless LANs. Therefore, all access points (APs) and all terminal/station devices that want to use a specific wireless LAN may use the same SSID. Devices that do not use a unique SSID are not able to join the BSS. Because the SSID is shown as plain text, the SSID may not provide any security features to the network.

"Extended service set identifier (ESSID)": A name of the network to which one desires to connect. ESSID is similar to SSID but a more extended concept.

"Basic service set identifier (BSSID)": BSSID including 48bits is used to distinguish a specific BSS. With an infrastructure BSS network, the BSSID may be configured for medium access control (MAC) of the AP equipment. For an independent BSS or Ad-hoc network, the BSSID may be generated with any value.

The charging station may include at least one GA and at least one GA controller configured to manage the at least one GA. The GA may include at least one wireless communication device. The charging station may refer to a place or location including at least one GA, which is provided in home, office, public place, road, parking area, etc.

In the present specification, "association" may be used as a term representing a procedure for establishing wireless communication between the electric vehicle communication controller (EVCC) and the supply equipment communication controller (SECC) controlling the charging infrastructure.

An electric vehicle charging system may include a conductive charging system using a cable or a wireless power transfer system in a non-contact manner, but is not limited thereto. The electric vehicle charging system may basically be defined as a system that charges a battery mounted on an electric vehicle by using power of a distribution network (grid) of commercial power or an energy storage device, and such an electric vehicle charging system may have various forms depending on the type of electric vehicle.

SAE TIR J2954, which is a representative standard for wireless charging, establishes industry standard specification guidelines that define criteria for interoperability, electromagnetic compatibility, minimum performance, safety, and testing for wireless charging of light-duty electric and plug-in electric vehicles.

A WCS (Wireless Communication System) according to the J2954 standard, which represents an example of a wireless charging system, may include a utility interface, a highfrequency power inverter, a coupling coil, a rectifier, a filter, an optional regulator, and communication between a vehicle energy charging/storage system and a power inverter connected to a utility. The utility interface is similar to an existing EVSE connection to a single-phase or three-phase AC power source.

Exemplary embodiments of the present disclosure will now be described in detail with reference to the accompanying drawings. In the drawings, the same components may be designated by the same reference numerals to facilitate overall understanding of the disclosure, and duplicate descriptions thereof will be omitted for simplicity.

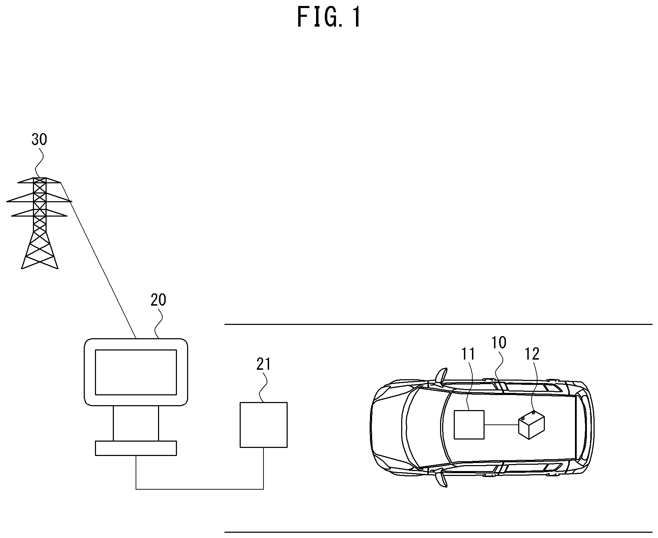

Hereinafter, details of the present disclosure will be described through exemplary embodiments shown in FIGS. 1 to 8.

FIG. 1 is a conceptual diagram of examples of a wireless power transfer (WPT) system for an electric vehicle to which exemplary embodiments of the present disclosure are applied.

As shown in FIG. 1, wireless power transfer may be performed by at least one component of an electric vehicle 10 and a charging station 20, and may be used to wirelessly transfer power to the electric vehicle 10.

However, the electric vehicle 10 according to the present disclosure may include a hybrid vehicle having both an electric motor and a general internal combustion engine, and may include not only an automobile but also a motorcycle, a cart, a scooter, and an electric bicycle.

Here, the electric vehicle 10 may generally be defined as a vehicle that supplies current induced from a rechargeable energy storage device such as a battery 12 to an electric motor, which is a power source.

In addition, the electric vehicle 10 may include a reception pad 11 having a reception coil to wirelessly charge the battery 12, and may also include a plug connector to charge the battery 12 via a wired method. At this time, the electric vehicle 10 that can charge the battery 12 via a wired method may be referred to as a plug-in electric vehicle (PEV).

Here, the charging station 20 may be connected to a power grid 30 or a power backbone and may provide AC or DC power to a transmission pad 21 including a transmission coil through a power link.

In addition, the charging station 20 may communicate with the power grid 30, an infrastructure management system managing the power grid, or an infrastructure server through wired or wireless communication, and may perform wireless communication with the electric vehicle 10. Here, the wireless communication may include Bluetooth, Zigbee, cellular, wireless local area network, etc.

In addition, for example, the charging station 20 may be located at various places such as a garage attached to a house of an electric vehicle owner, a parking area for charging electric vehicles at a gas station, a parking area of a shopping center, or a workplace.

Here, a process of wirelessly charging the battery 12 of the electric vehicle 10 may be performed by first locating the reception pad 11 of the electric vehicle 10 in an energy field by the transmission pad 21, and by coupling or interacting between the transmission coil of the transmission pad 21 and the reception coil of the reception pad 11. As a result of the interaction or coupling, an electromotive force may be induced in the reception pad 11, and the battery 12 may be charged by the induced electromotive force.

In addition, the charging station 20 and the transmission pad 21 may be collectively referred to as a supply power circuit (SPC) or a ground assembly (GA), and the SPC or GA may refer to the meaning defined above.

In addition, the reception pad 11 of the electric vehicle 10 and all or part of other internal components of the electric vehicle may be referred to as an EV power circuit (EVPC) or a vehicle assembly (VA), and the EVPC or the vehicle assembly may refer to the meaning defined above.

Here, the transmission pad 21 or the reception pad 11 may be configured as non-polarized or polarized.

At this time, when the pad is non-polarized, one pole may be located at the center of the pad, and the opposite pole may be located at the outer periphery. Here, flux may be formed to exit from the center of the pad and return at all outer boundaries of the pad.

In addition, when the pad is polarized, each pole may be located at one end of the pad. Here, flux may be formed based on the orientation of the pad.

In the present disclosure, the transmission pad 21 or the reception pad 11 may be collectively referred to as a wireless charging pad.

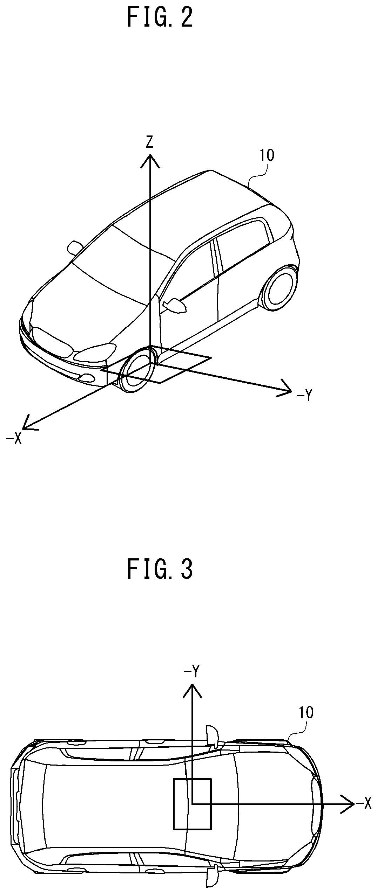

FIGS. 2 and 3 are conceptual diagrams of x, y, and z axes defined in SAE J2954 that can be applied to exemplary embodiments of the present disclosure.

As shown in FIGS. 2 and 3, in a right-hand coordinate system, the forward direction or front-to-rear direction of a vehicle is defined as the x-axis, the driver side of a left-hand side vehicle or the left-to-right direction of the vehicle is defined as the y-axis, the upward direction or vertical direction of the vehicle is defined as the z-axis, the magnetic center of a coil of a transmission pad 21 or a reception pad 11 is defined as x=0 and y=0, and a ground surface is defined as z=0.

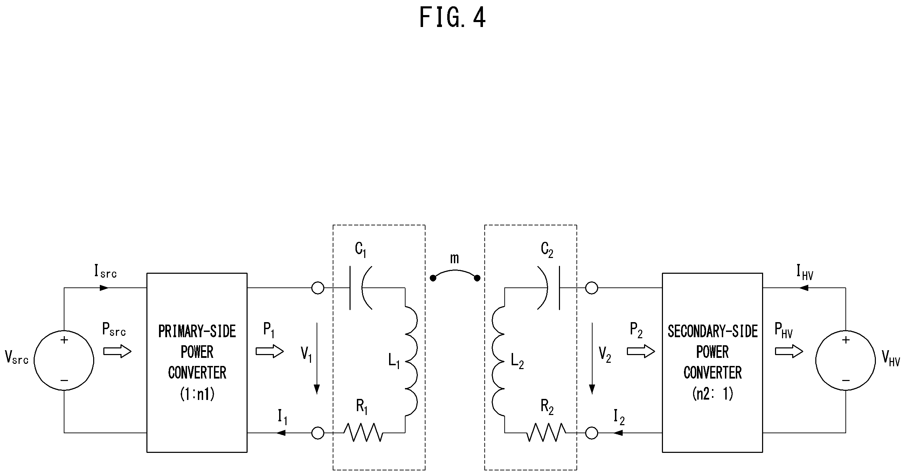

FIG. 4 is a conceptual diagram illustrating a wireless charging circuit for an electric vehicle according to exemplary embodiments of the present disclosure.

The left side circuit of FIG. 4 provides output power Psrc corresponding to power source Vsrc supplied from a power grid to a wireless charging power converter, and the wireless charging power converter may output power P1 obtained by performing frequency conversion and AC/DC conversion of the provided power Psrc so that the transmission coil L1 can radiate an electromagnetic field at a desired operating frequency.

The wireless charging power converter may include at least one of an AC/DC converter that converts the power Psrc supplied from the power grid into DC power when the power Psrc is AC power, and a low-frequency converter (or LF converter) that converts the DC power into AC power at an operating frequency suitable for wireless charging. The operating frequency may be determined to be in a range, for example, between 80 and 90 kHz, but is not limited thereto.

The power P1 output from the wireless charging power converter may again be supplied to a circuit composed of the transmission coil L1, a first capacitor C1, and a first resistor R1, and at this time, the first capacitor C1 may be determined to have a component value such that the transmission coil L1 has an operating frequency suitable for charging. In addition, the first resistor R1 may mean power loss generated by the transmission coil L1 and the first capacitor C1.

Here, the transmission coil L1 and a reception coil L2 may be electromagnetically coupled, defined by a coupling coefficient m, so that power is transferred, or power may be induced to the reception coil L2. Therefore, in the present disclosure, the meaning that power is transferred may be used interchangeably with the meaning that power is induced.

Here, power P2 induced or received by the reception coil may be provided to an electric vehicle power converter. At this time, a second capacitor C2 may be determined to have a component value such that the reception coil L2 has an operating frequency suitable for charging, and a second resistor R2 may mean power loss generated by the reception coil L2 and the second capacitor C2.

The electric vehicle power converter may include an LF/DC converter that converts power P2 of a specific operating frequency into DC power having a voltage level suitable for a battery VHV of the electric vehicle.

When the electric vehicle power converter outputs converted power PHV of power P2 provided thereto, the output power PHV may be used for charging the battery VHV mounted in the electric vehicle.

The right-side circuit of FIG. 4 may further include a switch for selectively connecting or disconnecting the reception coil L2 to and from the battery VHV.

The resonance frequency of the transmission coil L1 and the reception coil L2 may be configured to be similar or identical, and the reception coil L2 may be configured to be positioned in close proximity to the electromagnetic field generated from the transmission coil L1.

The circuit of FIG. 4 should be understood as an exemplary circuit relating to power transfer in a wireless charging system for an electric vehicle available for exemplary embodiments of the present disclosure, and the spirit of the present disclosure is not limited to the circuit of FIG. 4.

Meanwhile, the farther the transmission coil L1 and the reception coil L2 are positioned from each other, the greater the power loss may increase, and thus positioning of both coils may be an important factor.

At this time, the transmission coil L1 may be included in the transmission pad 21 of FIG. 1, and the reception coil L2 may be included in the reception pad 11 of FIG. 1. In addition, the transmission coil may also be referred to as a primary coil or a GA coil (Ground Assembly coil), and the reception coil may also be referred to as a secondary coil or a VA coil (Vehicle Assembly coil). Therefore, positioning between the transmission pad 21 and the reception pad 11 or positioning between the electric vehicle 10 and the transmission pad 21 is also an important factor.

Position alignment between the transmission pad 21 of FIG. 1 and the reception pad 11 mounted in the electric vehicle 10 may correspond to alignment as described above, and therefore may be defined as position alignment between the SPC/GA and the EVPC/VA, and should not be limitedly interpreted as position alignment between the transmission pad 21 and the reception pad 11.

The transmission pad 21 may be located below a ground surface, above a ground surface, or below a ground surface with the top surface of the transmission pad 21 being exposed. At this time, as illustrated in FIGS. 2 and 3, the x-axis may indicate a front-to-rear direction of the vehicle, the y-axis may indicate a left-to-right direction of the vehicle, and the z-axis may indicate an up-and-down direction of the vehicle.

In addition, the reception pad 11 of the electric vehicle may be defined by categorizing according to a height measured relative to the ground surface (defined in the z direction). For example, when the height of the reception pad 11 from the ground surface is 100-150 mm, the reception pad 11 may be set as class 1, when 140-210 mm, the reception pad 11 may be set as class 2, and when 170-250 mm, the reception pad 11 may be set as class 3. In this case, depending on the reception pad 11, partial support may be possible. For example, only class 1 may be supported, or classes 1 and 2 may be supported.

The height measured relative to the ground surface may correspond to a vehicle magnetic ground clearance as described above.

In addition, the position of the transmission pad 21 in the height direction (defined in the z direction) may be determined to be located between a maximum class and a minimum class supported by the reception pad 11. For example, when the reception pad 11 supports only class 1 and class 2, the transmission pad may be determined to be positioned between 100 and 210 mm relative to the reception pad 11.

In addition, a gap between the center of the transmission pad 21 and the center of the reception pad 11 may be determined to be located within a limit value in lateral and longitudinal directions (defined in the y and x directions). For example, in the lateral direction (defined in the y direction), the gap may be determined to be within ±75 mm, and in the longitudinal direction (defined in the x direction), the gap may be determined to be within ±100 mm.

Here, the relative position between the transmission pad 21 and the reception pad 11 may have different limit values depending on experimental results, and the above numerical values should be understood as examples.

In addition, although alignment has been described above as alignment between pads under the premise that the transmission pad 21 and the reception pad 11 each include a coil, more specifically, alignment may be defined as alignment between the primary coil (transmission coil or GA coil) embedded in the transmission pad 21 and the secondary coil (reception coil or VA coil) embedded in the reception pad 11.

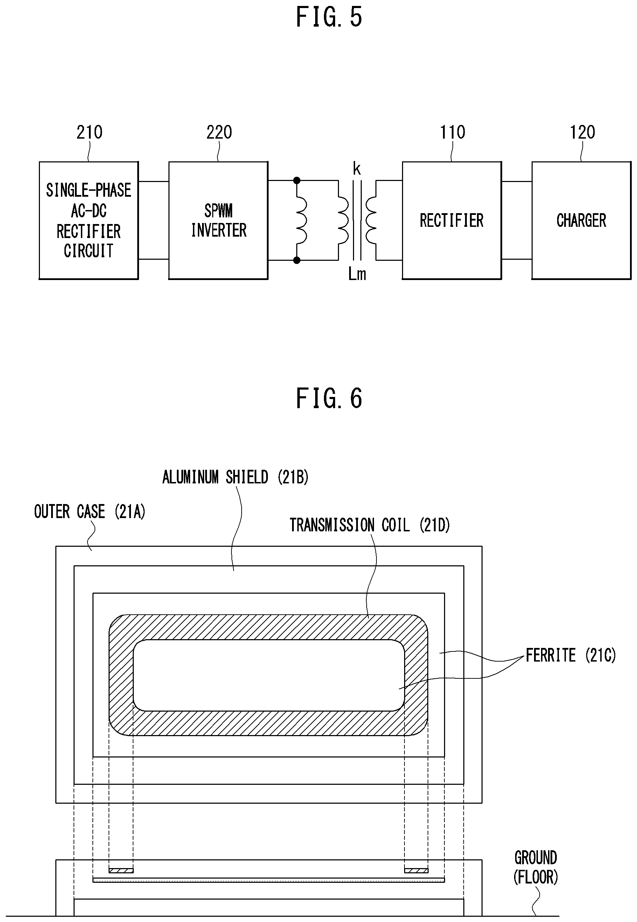

FIG. 5 is an equivalent circuit of a single-phase to single-phase wireless power transfer (WPT) system according to exemplary embodiments of the present disclosure.

A magnetic/inductive coupling or a resonance structure formed between a primary coil and a secondary coil of various exemplary embodiments of the present disclosure may be equivalently expressed by a transformer of FIG. 5.

As shown in FIG. 5, a single-phase AC-DC rectifier circuit 210 for applying an AC signal to the front end of the primary coil and a sinusoidal pulse width modulation (SPWM) inverter 220 are illustrated.

A rectifier 110 for transferring power from the secondary coil to a load/battery and a charger 120 are illustrated.

A wireless power transfer device according to exemplary embodiments of the present disclosure may include a power transfer circuit. The power transfer circuit illustrated in FIG. 5 may technically include a structure including the single-phase AC-DC rectifier circuit 210 and the SPWM inverter 220 on the primary coil side.

The power transfer circuit of FIG. 5 according to exemplary embodiments of the present disclosure may technically include a PI control structure based on measurement values on the single-phase AC-DC rectifier circuit 210 for controlling the single-phase AC-DC rectifier circuit 210 and the SPWM inverter 220 for transferring power to the primary coil side.

The SPWM inverter 220 receives the output of the single-phase AC-DC rectifier circuit 210, generates an AC signal, and may transfer the AC signal to the primary coil as an output.

By the operation of the rectifier 110 and the charger 120, the rectified AC signal may be applied to the battery to charge the battery.

FIG. 6 is a conceptual cross-sectional view and an elevational view of the transmission pad 21 according to exemplary embodiments of the present disclosure.

As shown in FIG. 6, a transmission coil 21d included in the transmission pad 21 is illustrated in a device in which wireless power transfer by single-phase operation such as in FIG. 5 is performed. The transmission pad 21 of FIG. 6 may provide a single-phase operation mode. In addition, when a reception pad 11 including a reception coil having a shape corresponding to the transmission pad 21 of FIG. 6 is used, the reception pad 11 may receive wireless power by the single-phase operation mode. A coil and a hardware configuration for the single-phase operation mode of the reception pad 11 may be readily implemented by a person skilled in the art by modifying FIG. 6.

As shown in FIG. 6, the transmission pad 21 may include an outer case 21a forming an exterior, an aluminum shield 21b installed in a plate shape inside the outer case 21a, a plate-shaped ferrite 21c installed on the aluminum shield 21b, and a transmission coil 21d installed on the plate-shaped ferrite 21c. Here, an upper side may mean above the ground based on a ground surface on which the transmission pad 21 is installed.

Here, ferrite, which is a material used for the plate-shaped ferrite 21c, may be a magnetic material including iron oxide, and may serve an auxiliary role in transmitting and receiving wireless power by reducing magnetic resistance and assisting a flow of flux.

In the present disclosure, a transmission pad or a reception pad may be referred to as a wireless charging pad.

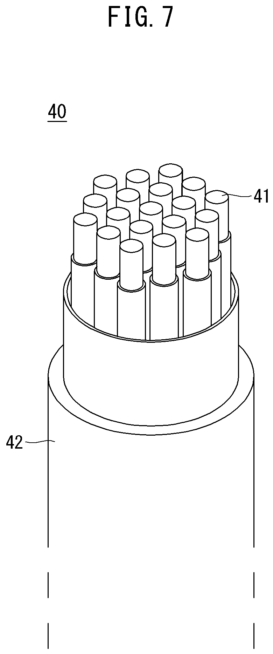

FIG. 7 illustrates a litz wire according to a conventional exemplary embodiment.

A conventional litz wire 40 has a form in which inner cores 41 are surrounded by an outer core 42. Each of the inner cores 41 forms a circle on a cross section perpendicular to a direction of a current path.

Due to the form of the litz wire 40, heat generated is not easily transmitted to the outside, and considering current transfer characteristics in which loss increases as heat generation continues, long-term use is difficult.

Therefore, the present disclosure is intended to provide a coil structure that can improve current transfer/delivery characteristics and reduce heat generation.

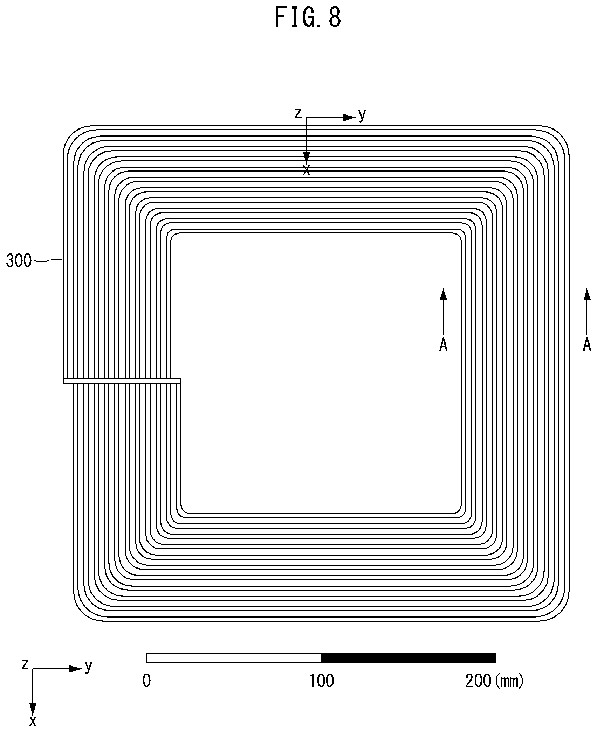

FIG. 8 illustrates a coil according to exemplary embodiments of the present disclosure.

The coil may be the transmission coil 21d of the transmission pad 21 illustrated in FIG. 6, or may be a reception coil of the reception pad.

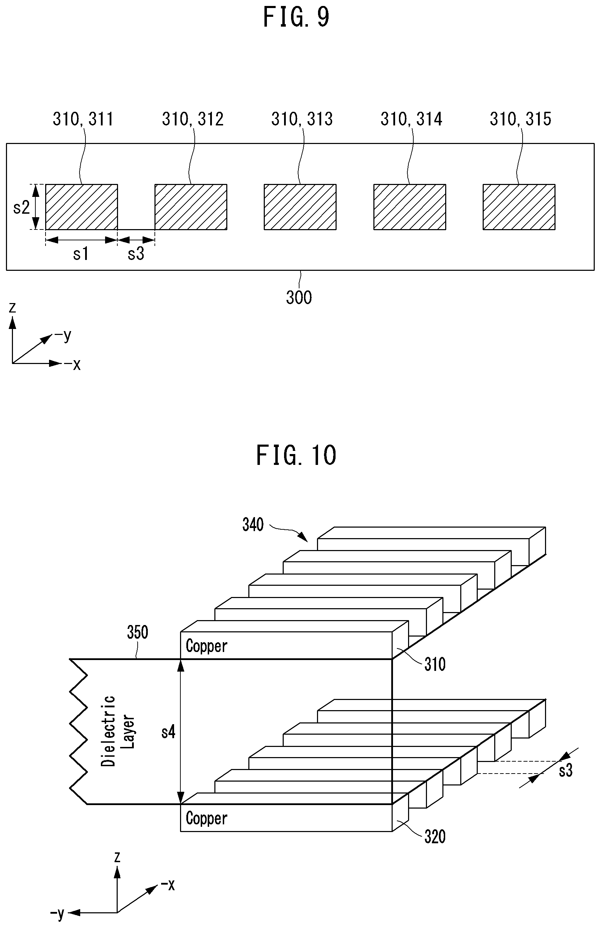

FIG. 9 is a cross-sectional view of one coil wire 300 of FIG. 8.

Hereinafter, FIGS. 8 and 9 will be described together.

The coil wire 300 is one wire, and the coil wire 300 may form a coil structure by being wound at least once. The coil structure is a coil structure for wireless power transfer by electromagnetic induction coupling between a transmission coil and a reception coil, and may be a part of at least one device of a power transmission pad device including a transmission coil or a power reception pad device including a reception coil.

At this time, directions of x, y, and z axes in FIGS. 8 and 9 may mean the same directions as those of x, y, and z axes in FIGS. 2 and 3, or may mean different directions.

A coil structure according to exemplary embodiments of the present disclosure may include a coil wire 300 formed by a plurality of wire elements 310 being extended in a first direction, which is a direction of a current path (for example, -y direction), and being arranged in parallel (that is, side by side).

At this time, on a cross section perpendicular to the first direction (-y direction) of the coil wire 300, the plurality of wire elements 310 may be arranged spaced apart from each other by a predetermined first interval (for example, an interval s3).

For example, a wire element 311 and a wire element 312 may be arranged spaced apart from each other by the first interval. The wire element 312 and a wire element 313 may be arranged spaced apart from each other by the first interval.

The coil wire 300 formed by arranging the wire elements 310 in the above-described manner may be wound to form a coil.

The coil wire 300 may form a quadrangular shape (for example, a rectangular shape) on a cross section perpendicular to the first direction of the coil wire 300.

In addition, each of the plurality of wire elements 310 may form a quadrangular shape on a cross section perpendicular to the first direction of the coil wire 300. For example, as illustrated in FIG. 9, each of the plurality of wire elements 310 may form a rectangular shape on the cross section. In other exemplary embodiments, each of the plurality of wire elements 310 may form a square shape on the cross section.

At this time, the plurality of wire elements 310 may be defined by a first side length (width) s1 and a second side length (thickness) s2 of the quadrangular shape, and the first interval s3. The first side length s1, the second side length s2, and the first interval s3 may be determined based on electrical characteristics and heat dissipation characteristics of the plurality of wire elements 310.

For example, in the case of charging a 22 kWh-class battery of an electric vehicle, a target specification related to current driving capability may be 87.5 kHz, three-phase 380 VAC, and a peak current of 57.89 A.

Since the resistance value of a copper wire is 1.69 × 10⁻⁸ Ω·m, when the same current flows through a unit area in a DC supply, less heat is generated. On the other hand, in the case of AC, a skin depth is about 0.22 mm at 87.5 kHz due to a skin effect. Therefore, since the skin depth is low due to the skin effect, the first side length s1 should be determined so that power loss for charging is minimized. At this time, the skin effect means a phenomenon in which current flows along a surface of a conductor in AC. The skin depth means a depth of the conductor through which current can flow along the conductor surface according to an AC frequency.

At this time, the first interval s3 may vary depending on the second side length s2. That is, the first interval s3 between the wire elements may increase relatively as a thickness of a copper conductor increases, since the first interval s3 is related to workability in a factory and the thickness of a copper plate. At this time, a drill bit blade size of 0.3 mm is most used due to manufacturing characteristics for processing a copper plate. When the drill bit blade size for processing a copper plate is 0.25 mm, a manufacturing efficiency decreases since the blade tends to break easily, and thus a drill bit for processing a copper plate having a blade size of 0.25 mm is not applied.

In a gap in which the plurality of wire elements 310 are spaced apart from each other by the first interval s3, a dielectric material may be disposed. That is, the gap may be filled with a dielectric material.

For example, the dielectric material may include at least one or more of materials such as ceramic, epoxy, and alumina.

For example, ceramic, which can be applied as a material of the gap, is the least sensitive material to temperature changes due to heat. When ceramic is selected as the material of the gap, an influence on a total life cycle of a product due to expansion or contraction according to temperature may be reduced.

For example, epoxy, which can be applied as a material of the gap, is easy to process and inexpensive. In addition, epoxy has a disadvantage in that thermal characteristics are insufficient in the same coil wire shape, but there is an advantage in that this can be solved by differentially applying according to environmental conditions of a vehicle since resistance to temperature significantly decreases when the number of laminations of the wire elements is increased.

FIG. 10 is a diagram for explaining a coil structure according to other exemplary embodiments of the present disclosure.

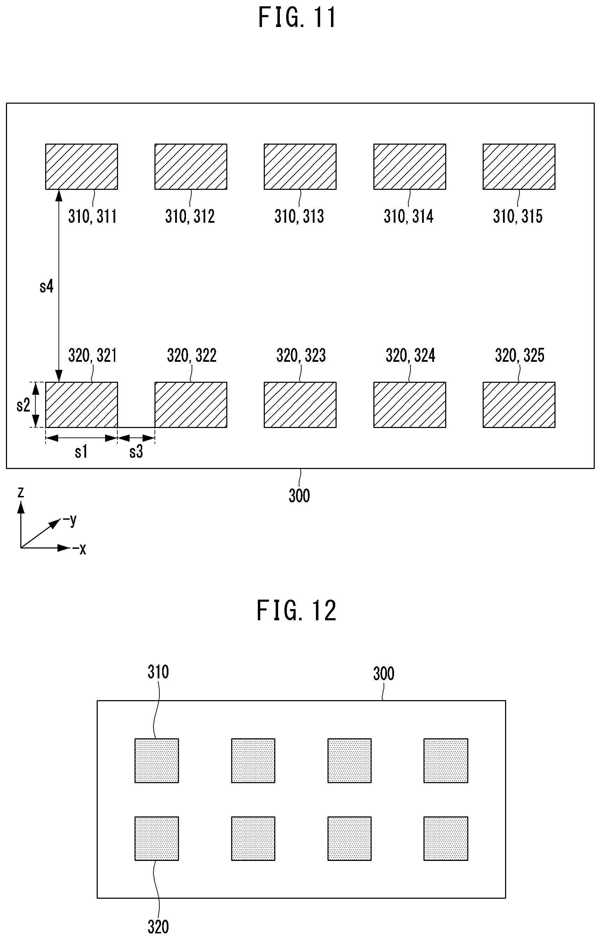

FIG. 11 is a cross-sectional view of one coil wire 300 of FIG. 8 according to other exemplary embodiments of the present disclosure.

Hereinafter, FIGS. 10 and 11 will be described together.

The coil wire 300 is one wire, and the coil wire 300 may form a coil structure by being wound at least once. The coil structure is a coil structure for wireless power transfer by electromagnetic induction coupling between a transmission coil and a reception coil, and may be a part of at least one device of a power transmission pad device including a transmission coil or a power reception pad device including a reception coil.

A plurality of wire elements 310 and 320 may be arranged in such a way that, on a cross section perpendicular to a first direction (-y direction) of the coil wire 300, the wire elements are spaced apart from each other by a first interval s3 in a second direction (-x direction), and are spaced apart from each other by a second interval s4 in a third direction (z direction) different from the second direction, thereby being arranged to form a laminated structure on a cross section perpendicular to the first direction of the coil wire 300.

At this time, since the second direction and the third direction are directions on the cross section (the cross section perpendicular to the first direction), the second direction and the third direction are both perpendicular to the first direction, and the second direction and the third direction form different directions within the cross section.

At this time, a first side length s1, a second side length s2, the first interval s3, and the second interval s4 may be determined based on electrical characteristics and heat dissipation characteristics of the plurality of wire elements 310.

In gaps 340 between the wire elements spaced apart from each other by the first interval s3 in the second direction (-x direction) and in gaps 350 between the wire elements spaced apart from each other by the second interval s4 in the third direction (z direction) among the plurality of wire elements 310 and 320, a dielectric material may be disposed. For example, the dielectric material may include at least one or more of materials such as ceramic, epoxy, and alumina.

FIG. 12 is a cross-sectional view of a coil wire according to still other exemplary embodiments of the present disclosure.

Unlike FIGS. 9 and 11, each of a plurality of wire elements 310 and 320 may form a square on a cross section perpendicular to a first direction, which is a direction of a current path.

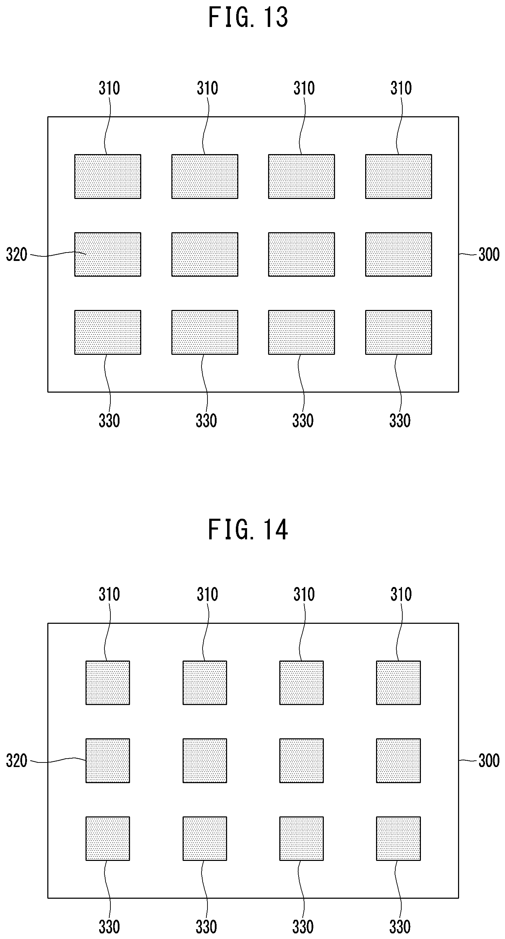

FIG. 13 is a cross-sectional view of a coil wire according to still other exemplary embodiments of the present disclosure.

A plurality of wire elements 310, 320, and 330 may be arranged such that, on a cross section perpendicular to the first direction of the coil wire 300, the wire elements are spaced apart from each other by a first interval in a second direction, and are repeatedly arranged such that, on the cross section perpendicular to the first direction of the coil wire 300, the wire elements are spaced apart from each other by a second interval in a third direction different from the second direction, thereby being arranged to form a laminated structure on the cross section perpendicular to the first direction of the coil wire 300. In FIG. 13, a three-layer laminated structure is illustrated as examples, but the number of layers may vary as necessary.

FIG. 14 is a cross-sectional view of a coil wire according to still other exemplary embodiments of the present disclosure.

For example, in the exemplary embodiment of FIG. 13, a coil structure has a cross section of wire elements being rectangular and a three-layer laminated structure, but in the exemplary embodiment of FIG. 14, the coil structure may have a cross section of wire elements being square and a three-layer laminated structure. A shape of a cross section and a number of laminations are not limited thereto and may be variously set.

In the exemplary embodiments of FIGS. 8 to 14, exemplary embodiments in which cross sections of wire elements 310, 320, and 330 are rectangular or square are illustrated, but the spirit of the present disclosure is not limited by such limited exemplary embodiments. In other exemplary embodiments of the present disclosure, the cross sections of the wire elements 310, 320, and 330 may form various geometric shapes having regularity.

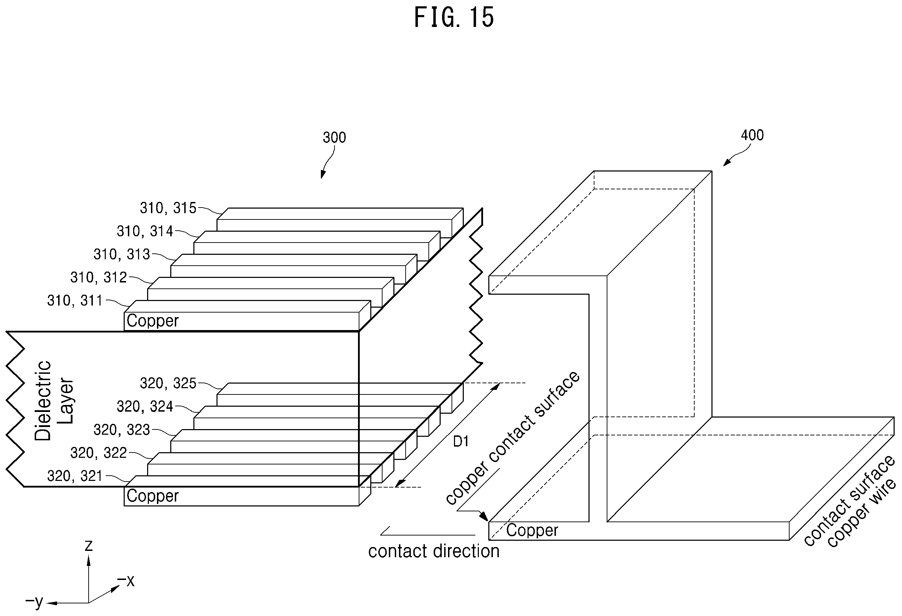

FIG. 15 is a diagram for explaining a coupling structure of a coil wire and an interface device according to exemplary embodiments of the present disclosure.

One end among both ends of a coil wire 300 may form a coil structure (not shown). At this time, the coil structure may be a coil structure for generating a magnetic field using electromagnetic induction by an alternating current electrical signal. In addition, the coil structure may be a coil structure for wireless power transfer by electromagnetic induction coupling between a transmission coil and a receiving coil, and may be included as a part of at least one of a power transmission pad apparatus including the transmission coil or a power reception pad apparatus including the receiving coil.

An interface device (interface structure) 400 may be coupled to the other end of both ends of the coil wire 300 to provide an electrical connection to the coil wire 300. That is, the interface device 400 may connect the coil wire 300 and a contact point. Hereinafter, in the present disclosure, the interface device may be referred to as an interface.

The coil wire 300 may be formed by a plurality of wire elements extending in a first direction (-y direction), which is a direction of a path of a current, and being arranged in parallel. On a cross-section perpendicular to the first direction of the coil wire 300, the plurality of wire elements may be arranged while being spaced apart from each other by a predetermined first interval.

For example, the coil wire 300 may have various shapes as described through FIGS. 9 to 14.

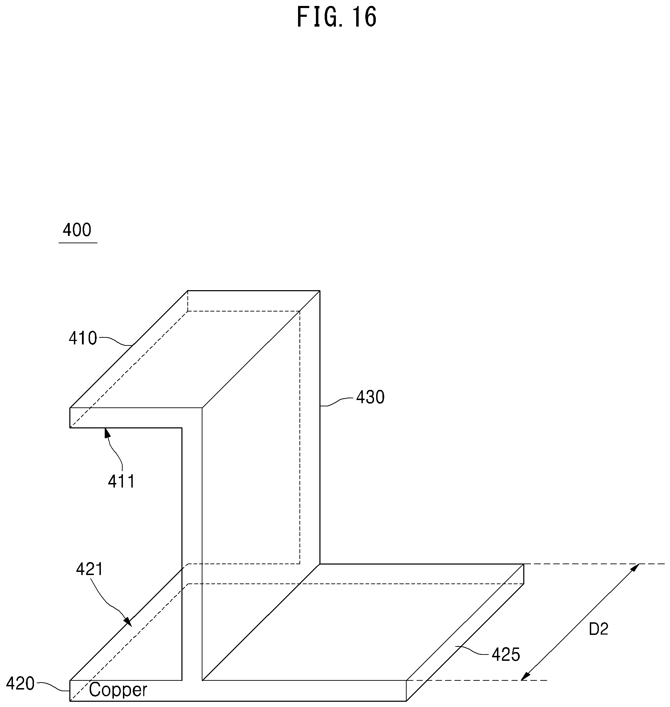

FIG. 16 shows an interface according to exemplary embodiments of the present disclosure.

Hereinafter, FIGS. 15 and 16 will be described together.

In exemplary embodiments of the present disclosure, the interface 400 may include a plate 430.

At this time, the plate 430 may contact one surface of the other end of the coil wire 300 that is perpendicular to the first direction (-y direction). A current may be applied to the plurality of wire elements 310 and 320 through the plate 430.

In other exemplary embodiments of the present disclosure, the interface 400 may include a first plate 410, a second plate 420, and a third plate 430.

The first plate 410 may have at least a part of a lower surface contacting an upper surface of the other end of the coil wire 300.

The second plate 420 may have at least a part of an upper surface contacting a lower surface of one end of the coil wire 300.

The third plate 430 may connect the first plate 410 and the second plate 420.

For example, when the coil wire 300 includes single-layer wire elements, the plurality of wire elements 310 may be arranged in a second direction (for example, -x direction) while being spaced apart from each other by the first interval on a cross-section perpendicular to the first direction (-y direction) of the coil wire 300. At this time, a lower surface 411 of the first plate 410 may contact an upper surface of the plurality of wire elements 311 to 315. An upper surface 421 of the second plate 420 may contact a lower surface of the plurality of wire elements 311 to 315. At this time, one side surface of the third plate 430 may contact or may be spaced apart from a side surface parallel to a cross-section of the plurality of wire elements 311 to 315 that is perpendicular to the first direction.

At this time, a width D2 of the second plate 420 in the second direction (-x direction) may be equal to or greater than a width D1 of the coil wire 300 in the state in which the wire elements 310 are arranged while being spaced apart from each other by the first interval in the second direction.

At this time, the second plate 420 may include a protruding plate 425 extending further in a direction (y direction) opposite to the direction (-y direction) in which the other end of the coil wire 300 is contacted based on the third plate 430. A current may be applied to the plurality of wire elements through the protruding plate 425 of the second plate 420.

In other exemplary embodiments, when the coil wire 300 includes multilayer wire elements, among the plurality of wire elements, wire elements 320 may be arranged while being spaced apart from each other by the first interval in the second direction (-x direction) on a cross-section perpendicular to the first direction (-y direction) of the coil wire 300, and wire elements 310 may be arranged while being spaced apart from each other by a second interval in a third direction (z direction) different from the second direction (-x direction) on the cross-section perpendicular to the first direction (-y direction) of the coil wire 300, thereby forming a stacked structure on the cross-section perpendicular to the first direction (-y direction) of the coil wire 300.

At this time, at least a part of a lower surface of the first plate 410 may contact an upper surface of the other end of the wire elements 311 to 315. At least a part of an upper surface of the second plate 420 may contact a lower surface of the other end of the wire elements 321 to 325. The third plate 430 may connect the first plate 410 and the second plate 420. One side surface of the third plate 430 may contact or may be spaced apart from a side surface parallel to a cross-section of the wire elements 311 to 315 and the wire elements 321 to 325 that is perpendicular to the first direction (-y direction).

In other exemplary embodiments, when the coil wire 300 includes wire elements of three or more layers, the wire elements contacting the lower surface of the first plate 410 may be wire elements of an uppermost layer, and the wire elements contacting the upper surface of the second plate 420 may be wire elements of a lowermost layer.

At this time, one side surface of the third plate 430 may contact a side surface parallel to a cross-section of all the wire elements of each layer that is perpendicular to the first direction (-y direction).

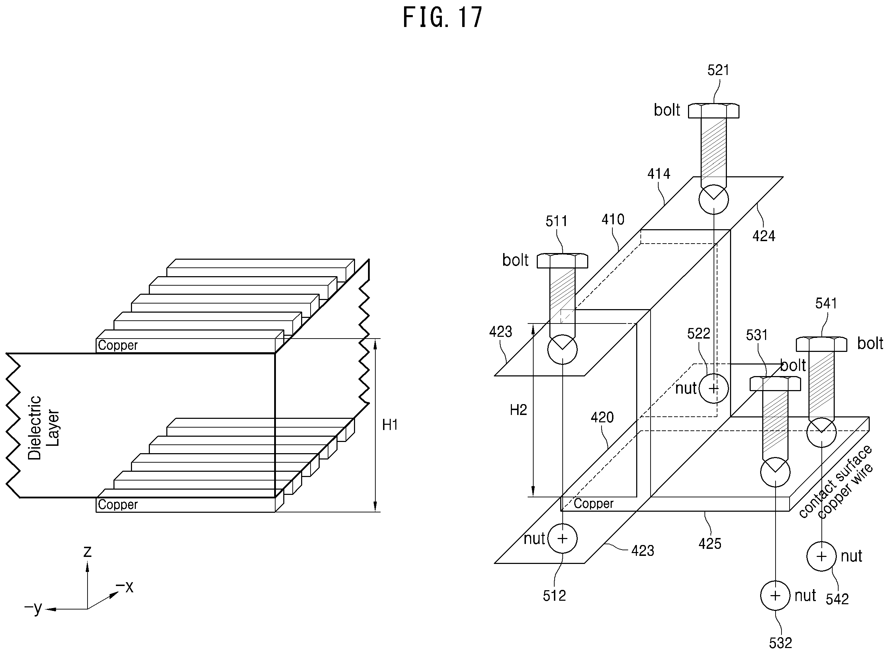

At this time, referring also to FIG. 17 described below, a height H1 of a cross-section of the coil wire 300 perpendicular to the first direction (-y direction) and an interval H2 between the first plate 410 and the second plate 420 may be the same.

FIG. 17 is a diagram for explaining a method of fixing an interface to a transmission pad or a reception pad according to exemplary embodiments of the present disclosure.

Hereinafter, FIGS. 1, 6, 8, and 17 will be described together.

The coil wire 300 may be wound on an inner bottom surface of an outer case 21a of FIG. 6 to surround a central space so that a transmission coil 21d of a transmission pad 21 or a receiving coil of a reception pad 11 may be formed.

In exemplary embodiments of the present disclosure, a second plate 420 and a protruding plate 425 may be fixedly coupled to the inner bottom surface of the outer case by predetermined fasteners (for example, bolts and nuts) 531, 532, 541, and 542.

In other exemplary embodiments, fastener may be inserted into the inside of the second plate 420 so that the second plate 420 may be fixedly coupled to the inner bottom surface of the outer case through the fastener. The second plate 420 and the outer case may be fixedly coupled to each other by various fasteners at various positions in addition to the method described above.

The first plate 410 may include a first protruding plate 413 and a second protruding plate 414, both ends of which are respectively extended in a direction perpendicular to the first direction (-y direction) (for example, -x direction) on a plane in which the first plate 410 is extended.

The second plate 420 may include a third protruding plate 423 and a fourth protruding plate 424, both ends of which are respectively extended in a direction perpendicular to the first direction (-y direction) (for example, a second direction (-x direction)) on a plane in which the second plate 420 is extended.

The third protruding plate 423 corresponding to the first protruding plate 413 and the first protruding plate 413 may be fixedly coupled by predetermined first fasteners (for example, bolts and nuts) 511 and 512.

The fourth protruding plate 424 corresponding to the second protruding plate 414 and the second protruding plate 414 may be fixedly coupled by predetermined second fasteners (for example, bolts and nuts) 521 and 522.

A shape of the interface 400 may be maintained through a coupling structure of the first protruding plate 413 and the third protruding plate 423, a coupling structure of the second protruding plate 414 and the fourth protruding plate 424, and a coupling structure of the protruding plate 425 and the outer case, and thereby, a coupling shape of the coil wire 300 and the interface 400 may be maintained.

In exemplary embodiments of the present disclosure, a wireless charging pad (that is, the reception pad 11 or the transmission pad 21) may include a coil formed by winding the coil wire 300 to surround a central space, and an interface 400 coupled to the other end among both ends of the coil wire 300 to provide an electrical connection with the coil wire 300.

At this time, the coil wire 300 may be formed by a plurality of wire elements extending in a first direction, which is a direction of a path of a current, and being arranged in parallel. On a cross-section perpendicular to the first direction of the coil wire 300, the plurality of wire elements may be arranged while being spaced apart from each other by a predetermined first interval.

The wireless charging pad 11 or 21, for example, the transmission pad 21, may further include the outer case 21a. The coil wire 300 may be wound on an inner bottom surface of the outer case 21a to form the transmission coil 21d.

At this time, the protruding plate 425 of the second plate 420 of the interface 400 may be fixedly coupled to the inner bottom surface of the outer case 21a.

At this time, a shape of the interface 400 and a specific coupling structure between the interface 400 and the coil wire 300 may be as described through FIGS. 15 to 17.

At this time, one end among both ends of the coil wire 300 may further include a second interface (not shown) that is coupled to the one end to provide an electrical connection with another coil wire 300 instead of directly forming a coil structure. Alternatively, in an alternative exemplary embodiment of the present disclosure, one end may form the coil structure, the other end may be connected to the interface 400, and a branch may be formed between the one end and the other end, and a third end of the branch may be connected to another coil wire through the second interface.

The second interface may have the same shape as the interface 400.

For example, the second interface may include a first plate having at least a part of a lower surface contacting an upper surface of a third end of the coil wire 300, a second plate having at least a part of an upper surface contacting a lower surface of the third end of the coil wire 300, and a third plate connecting the first plate and the second plate.

At this time, the second plate may include a protruding plate extending further in a direction (-y direction) opposite to a direction (y direction) in which the third end of the coil wire 300 is contacted based on the third plate. Therefore, a current may flow from the protruding plate 425 of the interface 400 through the plurality of wire elements to the protruding plate of the second plate of the second interface.

The second interface may be fixedly coupled to the reception pad 11 or the transmission pad 21 in the same manner as the interface 400.

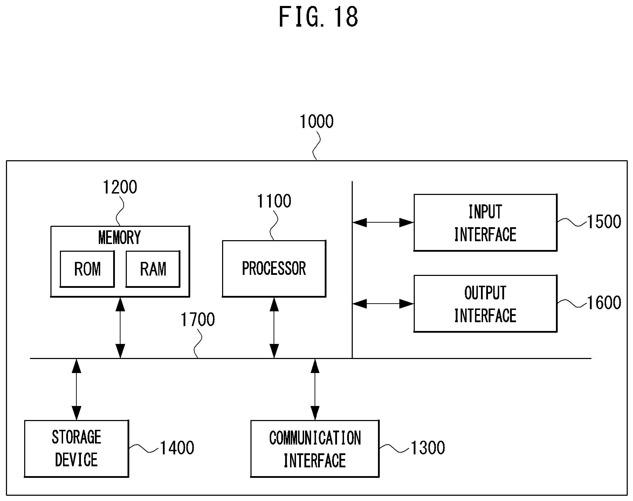

FIG. 18 is a block diagram illustrating a generalized configuration of hardware included in a transmission pad and/or a reception pad of the present disclosure or related to the transmission pad and/or the reception pad to control a sequence for wireless power transfer.

For convenience of explanation, the hardware for controlling the sequence for wireless power transfer may be referred to as a controller 1000.

At least a part of a process of a wireless charging method for controlling a sequence for wireless power transfer through a wireless charging system according to exemplary embodiments of the present disclosure may be executed by the controller 1000 of FIG. 18.

The controller 1000 may be disposed at an electric vehicle 10 side, at an electric vehicle supply equipment (EVSE) 20 side, or at a transmission pad 21 side.

The controller 1000 may include at least one processor 1100, a memory 1200 storing at least one instruction executed by the processor 1100 to perform the above-described operations, and a communication interface 1300 connected to a network to perform communication. The controller 1000 for wireless power transfer may further include a storage device 1400 capable of storing at least one instruction executed in the above-described operations or data generated in an execution process. The controller 1000 for wireless power transfer may further include an input interface 1500 and an output interface 1600 for interaction with a user. Each component included in the controller 1000 for wireless power transfer may be connected by a system bus 1700 and may communicate with each other.

The controller 1000 or a computing system according to exemplary embodiments of the present disclosure may include at least one processor 1100 and a memory 1200 storing instructions for instructing the at least one processor 1100 to perform at least one step. At least a part of steps of a method according to exemplary embodiments of the present disclosure may be performed by the at least one processor 1100 loading and executing the instructions from the memory 1200.

The processor 1100 may mean a central processing unit (CPU), a graphics processing unit (GPU), or a dedicated processor for performing methods according to exemplary embodiments of the present disclosure.

Each of the memory 1200 and the storage device 1400 may be composed of at least one of a volatile storage medium and a non-volatile storage medium. For example, the memory 1200 may be composed of at least one of a read only memory (ROM) and a random access memory (RAM).

Here, at least one instruction may include at least one of a sequence for mutually identifying at least one of the electric vehicle 10, the electric vehicle supply equipment 20, and the transmission pad 21, a sequence for association of wireless communication between at least two of the electric vehicle 10, the electric vehicle supply equipment 20, and the transmission pad 21, a sequence for aligning and/or pairing by mutual positioning, and a sequence for allowing application of an AC signal such that power is transferred after aligning and/or pairing.

In addition, the controller 1000 may include the communication interface 1300 for performing communication through a wireless network.

In addition, the controller 1000 may further include the storage device 1400, the input interface 1500, and the output interface 1600.

In addition, each component included in the controller 1000 may be connected by the bus 1700 and may communicate with each other.

Examples of the controller 1000 of the present disclosure may be a communicable desktop computer, a laptop computer, a notebook, a smartphone, a tablet PC, a mobile phone, a smart watch, a smart glass, an e-book reader, a PMP (portable multimedia player), a portable game device, a navigation device, a digital camera, a DMB (digital multimedia broadcasting) player, a digital audio recorder, a digital audio player, a digital video recorder, a digital video player, a PDA (Personal Digital Assistant), etc. An operation of a method according to exemplary embodiments of the present disclosure may be implemented as a program or code readable by a computer in a computer-readable recording medium. The computer-readable recording medium includes all types of recording devices in which information readable by a computer system is stored. In addition, the computer-readable recording medium may be a distributed type in which a program or code readable and executable by a computer is stored and executed in a computer system connected to a network.

In addition, the computer-readable recording medium may include hardware devices specially configured to store and execute program instructions such as ROM, RAM, and flash memory. The program instructions may include not only machine code generated by a compiler but also high-level language code executable by a computer using an interpreter, etc.

Some aspects of the present disclosure have been described in the context of devices, but this may also represent a description according to a corresponding method, in which blocks or devices correspond to method steps or features of method steps. Similarly, aspects described in the context of methods may also be represented as corresponding blocks or items or corresponding features of devices. Some or all of method steps may be performed by (or using) hardware devices such as a microprocessor, a programmable computer, or an electronic circuit. In some exemplary embodiments, at least one of the most important method steps may be performed by such devices.

In exemplary embodiments, a programmable logic device (for example, a field-programmable gate array) may be used to perform a part or all of functions of the methods described herein. In exemplary embodiments, the field-programmable gate array may operate together with a microprocessor for performing one of the methods described herein. In general, the methods are preferably performed by some hardware device.

Although the preferred exemplary embodiments of the present disclosure have been described above with reference to the drawings, it will be understood by those skilled in the art that the present disclosure may be variously modified and changed without departing from the spirit and scope of the present disclosure defined by the following claims.

## Claims

1. An interface device providing an electrical connection with a coil wire having an end forming a coil structure for generating a magnetic field using electromagnetic induction by an alternating current electrical signal, and other end being connected with the interface device, is configured to:
provide the electrical connection with the coil wire based on the coupling to the other end of the coil wire formed by a plurality of wire elements that extend in a first direction, which is a direction of a current path, and are arranged in parallel,
wherein, on a cross-section perpendicular to the first direction of the coil wire, the plurality of wire elements are arranged to be spaced apart from each other by a predetermined first interval.

2. The interface device of claim 1, comprising a third plate contacting a surface of the other end of the coil wire, which is perpendicular to the first direction of the coil wire, wherein a current is applied to the plurality of wire elements through the third plate.

3. The interface device of claim 1, comprising:
a first plate having at least a part of a lower surface contacting an upper surface of the other end of the coil wire;
a second plate having at least a part of an upper surface contacting a lower surface of the other end of the coil wire; and
a third plate connecting the first plate and the second plate.

4. The interface device of claim 2 or claim 3, wherein the plurality of wire elements are arranged while being spaced apart from each other by the first interval in a second direction on a cross-section perpendicular to the first direction of the coil wire, and are arranged while being spaced apart from each other by a second interval in a third direction different from the second direction on the cross-section perpendicular to the first direction of the coil wire, thereby forming a stacked structure on the cross-section perpendicular to the first direction of the coil wire, and
wherein a current is applied to the plurality of wire elements through the third plate.

5. The interface device of claim 3, wherein the second plate comprises a protruding plate extending in a direction opposite to a direction in which the other end of the coil wire is contacted based on the third plate, and
wherein a current is applied to the plurality of wire elements through the protruding plate of the second plate.

6. The interface device of claim 5, wherein the coil wire is wound on an inner bottom surface of an outer case to form a coil, and
wherein the protruding plate of the second plate is fixedly coupled to the inner bottom surface of the outer case.

7. The interface device of claim 3, wherein the first plate comprises a first protruding plate and a second protruding plate, both ends of which are respectively extended in a direction perpendicular to the first direction on a plane in which the first plate is extended, and
wherein the second plate comprises a third protruding plate and a fourth protruding plate, both ends of which are respectively extended in a direction perpendicular to the first direction on a plane in which the second plate is extended,
wherein the third protruding plate corresponding to the first protruding plate and the first protruding plate are fixedly coupled by a first fastener, and
the fourth protruding plate corresponding to the second protruding plate and the second protruding plate are fixedly coupled by a second fastener.

8. A coupling structure of a coil wire and an interface device, comprising:
a coil wire formed by a plurality of wire elements extending in a first direction that is a direction of a current path and being arranged in parallel, an end among both ends of the coil wire forming a coil structure for generating a magnetic field using electromagnetic induction by an alternating current electrical signal; and
the interface device coupled to other end among both ends of the coil wire to provide an electrical connection with the coil wire,
wherein, on a cross-section perpendicular to the first direction of the coil wire, the plurality of wire elements are arranged while being spaced apart from each other by a predetermined first interval.

9. The coupling structure of claim 8, wherein the interface device comprises a third plate contacting one surface of the other end of the coil wire that is perpendicular to the first direction of the coil wire, and wherein a current is applied to the plurality of wire elements through the third plate.

10. The coupling structure of claim 8, wherein the interface device comprises:
a first plate having at least a part of a lower surface contacting an upper surface of the other end of the coil wire;
a second plate having at least a part of an upper surface contacting a lower surface of the other end of the coil wire; and
a third plate connecting the first plate and the second plate.

11. The coupling structure of claim 9 or claim 10, wherein the plurality of wire elements are arranged while being spaced apart from each other by the first interval in a second direction on a cross-section perpendicular to the first direction of the coil wire, and are arranged while being spaced apart from each other by a second interval in a third direction different from the second direction on the cross-section perpendicular to the first direction of the coil wire, thereby forming a stacked structure on the cross-section perpendicular to the first direction of the coil wire, and
wherein a current is applied to the plurality of wire elements through the third plate.

12. The coupling structure of claim 10, wherein the second plate comprises a protruding plate extending further in a direction opposite to a direction in which the other end of the coil wire is contacted based on the third plate, and
wherein a current is applied to the plurality of wire elements through the protruding plate of the second plate.

13. The coupling structure of claim 12, wherein the coil wire is wound on an inner bottom surface of an outer case to form a coil, and
wherein the protruding plate of the second plate is fixedly coupled to the inner bottom surface of the outer case.

14. The coupling structure of claim 10, wherein the first plate comprises a first protruding plate and a second protruding plate, both ends of which are respectively extended in a direction perpendicular to the first direction on a plane in which the first plate is extended, and
wherein the second plate comprises a third protruding plate and a fourth protruding plate, both ends of which are respectively extended in a direction perpendicular to the first direction on a plane in which the second plate is extended,
wherein the third protruding plate corresponding to the first protruding plate and the first protruding plate are fixedly coupled by predetermined first fastener, and
the fourth protruding plate corresponding to the second protruding plate and the second protruding plate are fixedly coupled by predetermined second fastener.

15. A wireless charging pad for wirelessly transmitting or receiving power using electromagnetic induction by an alternating current electrical signal flowing through a coil wire, comprising:
a coil formed by winding an end among both ends of the coil wire to surround a central space; and
an interface device coupled to other end among both ends of the coil wire to provide an electrical connection with the coil wire,
wherein the coil wire is formed by a plurality of wire elements extending in a first direction that is a direction of a current path and being arranged in parallel, and
wherein, on a cross-section perpendicular to the first direction of the coil wire, the plurality of wire elements are arranged while being spaced apart from each other by a predetermined first interval.

16. The wireless charging pad of claim 15, wherein the interface device comprises a third plate contacting one surface of the other end of the coil wire that is perpendicular to the first direction of the coil wire, and wherein a current is applied to the plurality of wire elements through the third plate.

17. The wireless charging pad of claim 15, wherein the interface device comprises:
a first plate having at least a part of a lower surface contacting an upper surface of the other end of the coil wire;
a second plate having at least a part of an upper surface contacting a lower surface of the other end of the coil wire; and
a third plate connecting the first plate and the second plate.

18. The wireless charging pad of claim 16 or claim 17, wherein the plurality of wire elements are arranged while being spaced apart from each other by the first interval in a second direction on a cross-section perpendicular to the first direction of the coil wire, and are arranged while being spaced apart from each other by a second interval in a third direction different from the second direction on the cross-section perpendicular to the first direction of the coil wire, thereby forming a stacked structure on the cross-section perpendicular to the first direction of the coil wire, and
wherein a current is applied to the plurality of wire elements through the third plate.

19. The wireless charging pad of claim 17, wherein the second plate comprises a protruding plate extending further in a direction opposite to a direction in which the other end of the coil wire is contacted based on the third plate, and
wherein a current is applied to the plurality of wire elements through the protruding plate of the second plate.

20. The wireless charging pad of claim 19, further comprising an outer case,
wherein the coil wire is wound on an inner bottom surface of the outer case to form the coil, and
wherein the protruding plate of the second plate is fixedly coupled to the inner bottom surface of the outer case.

21. The wireless charging pad of claim 17, wherein the first plate comprises a first protruding plate and a second protruding plate, both ends of which are respectively extended in a direction perpendicular to the first direction on a plane in which the first plate is extended, and
wherein the second plate comprises a third protruding plate and a fourth protruding plate, both ends of which are respectively extended in a direction perpendicular to the first direction on a plane in which the second plate is extended,
wherein the third protruding plate corresponding to the first protruding plate and the first protruding plate are fixedly coupled by predetermined first fastener, and
the fourth protruding plate corresponding to the second protruding plate and the second protruding plate are fixedly coupled by predetermined second fastener.
